# EUROPEAN PATENT SPECIFICATION

(11) **EP 1 955 944 B1**
(45) Date of publication and mention of the grant of the patent: **11.07.2012**
(21) Application number: 07002482.3
(22) Date of filing: 06.02.2007
(51) Int. Cl.: B63H 5/00, B63H 5/16

(54) **Asymmetric preswirl stator of ship**
Asymmetrischer Vordrallstator eines Schiffes
Stator de tourbillon asymétrique pour navire

(43) Date of publication of application: 13.08.2008
(60) Divisional application: 09173886.4
(73) Proprietor: DAEWOO SHIPBUILDING & MARINE ENGINEERING CO., LTD, Seoul (KR)
(72) Inventor: Kim, Yong soo, Geoje-si Gyeongsangnam-do (KR); Hwang, Yoon sik, Geoje-si Gyeongsangnam-do (KR); Choi, Young bok, Gunpo-si Gyeonggi-do (KR); Kim, Sung pyo, Bupyeong-gu Incheon-si (KR); Kim, In pyo, Dongjak-gu Seoul (KR); Park, Jc jun, Geoje-si Gycongsangnam-do (KR); Park, Jac sang, Seocho-gu Seoul (KR); Kim, Moon chan, Geumjeong-gu Busan-si (KR)
(74) Representative: Maillet, Alain

(56) References cited:
- DE-U1- 8 314 111
- DE-U1-202004 019 568
- ES-A1- 2 075 785
- US-A- 4 798 547
- US-A- 5 209 642

## Description

### BACKGROUND OF THE INVENTION

### Field of the Invention

The present invention relates to an asymmetric preswirl stator of a ship, and more particularly to an asymmetric preswirl stator, which has various asymmetric structures in consideration of wake current characteristics of the hull of a ship and a rotational direction of a propeller of the ship and thus makes the load distribution on the propeller uniform, thereby improving the efficiency and the cavitation property of the propeller.

### Description of the Related Art

As part of the improvement of the propulsion efficiency of a ship, a preswirl stator is installed on the ship so that a rotating propeller can exhibit the maximum propulsion efficiency with a velocity component of a flow of water coming into the propeller in a tangential direction.

The above preswirl stator causes a flow of water at the stern of the ship to be bent in a direction opposite to the rotational direction of the propeller and to be returned to the propeller, when the propeller rotates and the hull of the ship runs forward, thus reducing a rotational flow generated at the rear of the propeller and improving the propulsion efficiency of the propeller. Generally, when the propeller is rotated, a rotational flow in the same direction as the rotational direction of the propeller is generated in the water aL the rear of the propeller. The rotational flow is not used to propel the hull, but reduces the propulsion efficiency of the propeller as much as the amount of the energy of the rotational flow. Accordingly, when the rotational flow is reduced, the propulsion efficiency of the propeller is increased as much as the reduced amount of the rotational flow. Thus, in order to generate a rotational flow in a direction opposite to the rotational direction of the propeller, the preswirl stator is installed.

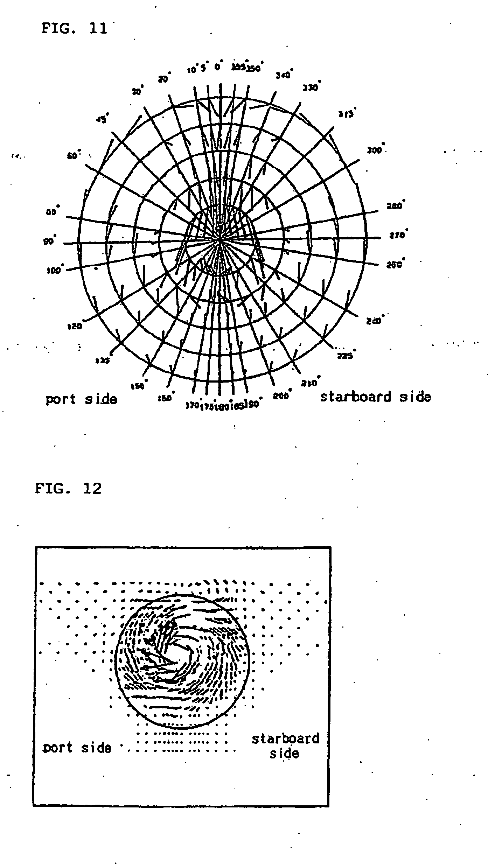

In a low-speed full ship, as shown in FIG. 11, an upward velocity due to the shape of the stern on the plane of a propeller is increased, and tangential velocities, induced by the ship on the port and starboard sides, vary angles of attack of a flow coming into the propeller. Accordingly, in case that flow velocities at the rear of the propeller are measured, the flow velocities on the port and starboard sides vary, as shown in FIG. 12.

When a preswirl stator, which is installed for the purpose of improving the efficiency of the propeller due to the recovery of rotary energy of the propeller, has a symmetrical structure, tangential velocity cancellation on the starboard side is relatively unnecessarily increased.

US 4 798 547 discloses an asymonetric preswirl stator according to the preamble of claim 1.

ES-A-2 075 785 disclosed a preswirl stator with three blades on each side of the center line and which are disposed symmetrically in relation to this center line. DE-U-83 14 111 discloses a preswirl stator comprising two blades on one side of the center line, or two blades on each sides of the center line and which are disposed symmetrically in relation to this center line, or one blade on each side of the center line.

The present invention proposes a solution to improve the efficiency and the cavitation property of the propeller of the ship.

### SUMMARY OF THE INVENTION

Therefore, the present invention has been made in view of the above problems, and it is an object of the present invention to provide an asymmetric preswirl stator, which has various asymmetric structures in consideration of wake current characteristics of the hull of a ship and a rotational direction of a propeller of the ship and thus makes the load distribution on the propeller uniform, thereby improving the efficiency and the cavitation property of the propeller.

In accordance with the present invention, the above and other objects can be accomplished by the provision of an asymmetric preswirl stator according to claim 1.

Other aspects of the present invention are defined in the other claims.

### BRIEF DESCRIPTION OF THE DRAWINGS

FIG. 1 is a perspective view of an asymmetric preswirl stator in an installed state ;
FIG. 2 is a side view of the asymmetric preswirl stator of figure 1 in the installed state.
FIG. 3 is a front view of the asymmetric preswirl stator of figure 1;
FIG. 4 is a side view of an essential part of the asymmetric preswirl stator of figure 1 ;
FIG. 5 is a perspective view of another asymmetric preswirl stator in an installed state ;
FIG. 6 is a side view of the asymmetric preswirl stator of figure 2 in the installed state ;
FIG. 7 is a front view of the asymmetric preswirl stator of figure 2;
FIG. 8 is a side view of an essential part of the asymmetric preswirl stator in figure 2
FIG. 9 is a front view of an asymmetric preswirl stator in accordance with an embodiment of the present invention;
FIG. 10 is a side view of a conventional preswirl stator in an installed state; and
FIG. 11 is a diagram showing tangential velocities on the plane of a propeller of a general low-speed full ship; and
FIG. 12 is a diagram showing flow velocities measured at the rear of the propeller of the general low-speed full ship.

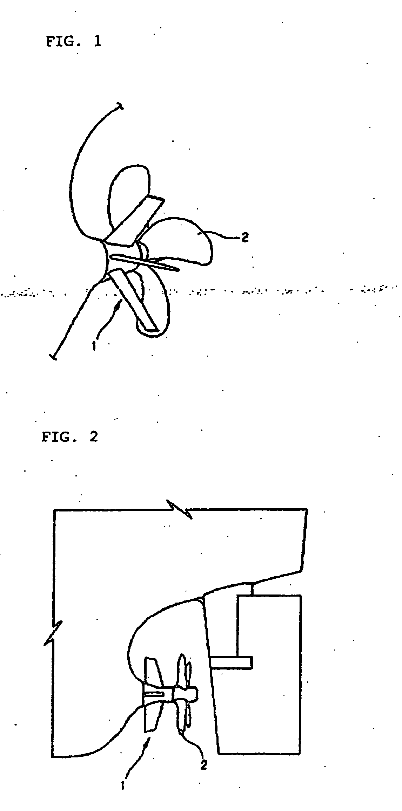

Figures 1-8 are not embodiments of the invention.

An asymmetric preswirl stator 1 in accordance with figures 1-4 comprises three blades, which are installed only on the port side of a ship from a center line in an axial direction such that the three blades are radially disposed at intervals of 45 degrees, thus improving the efficiency and the cavitation property of a propeller 2.

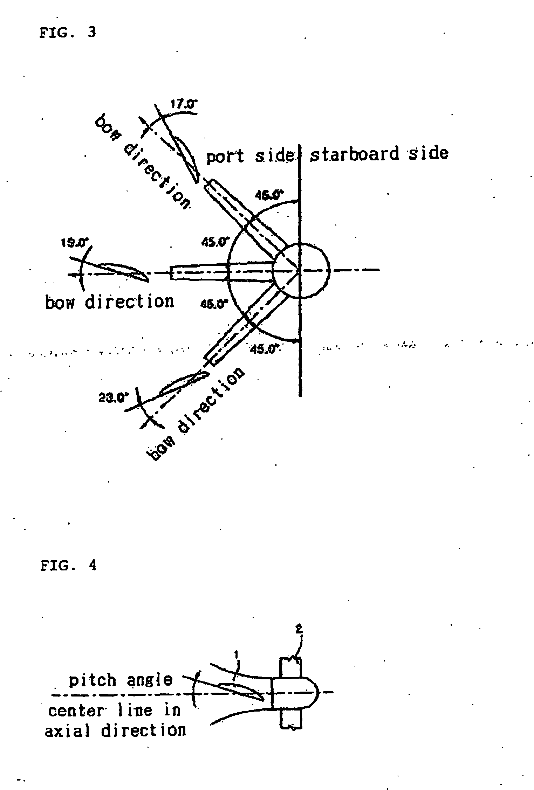

As shown in FIG. 3, in the asymmetric preswirl stator 1, three blades are installed on the port side of the ship, and any blade is not installed on the starboard side of the ship.

That is, since any blade is not installed on the starboard side of the ship, an axial velocity component on the starboard side becomes fast and the disturbance of a flow of water coming into the propeller 2 disappears. Thereby, the load distribution on the propeller 2 becomes uniform, and thus the efficiency and the cavitation property of the propeller 2 are improved.

More specifically, the three blades are installed at intervals of 45 degrees on the port side, and any blade is not installed on the starboard side. Preferably, among the blades installed on the port side, the uppermost blade has the smallest pitch angle with the center line in the axial direction, the lowermost blade has the largest pitch angle, and the middle blade has a pitch angle between the above two angles of the uppermost and lowermost blades.

Most preferably, the pitch angles of the uppermost, middle, and lowermost blades with the center line in the axial direction are respectively 17, 19, and 23 degrees.

The asymmetric preswirl stator 1 having the above installation structure has an improvement of 3~4 % in efficiency, compared with a conventional preswirl stator, and a reduction of approximately 40 tons in weight, compared with a conventional symmetric reaction pin, thus being economically advantageous. Further, since the load distribution on the propeller 2. becomes uniform, the efficiency and the cavitation property of the propeller 2 are improved.

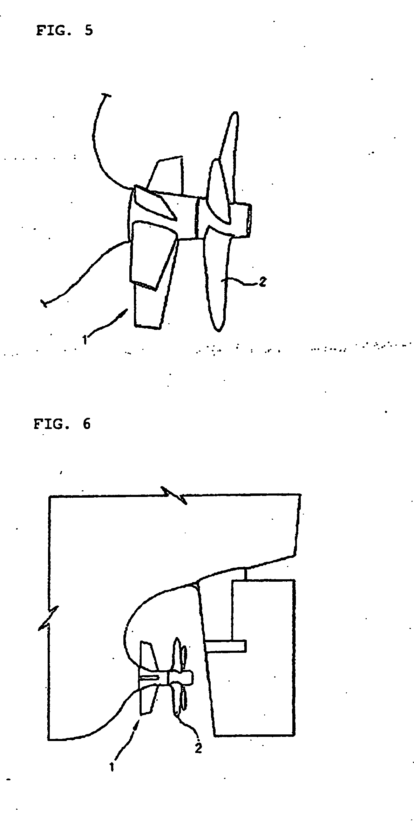

Hereinafter, an asymmetric preswirl stator in accordance with figures 5-8 will be described in detail with reference to the annexed drawings.

Such an asymmetric preswirl stator 1 comprises blades, which are radially installed on port and starboard sides of a ship from a center line in an axial direction such that three blades are radially disposed on the port side and one blade is disposed on the starboard side, thus improving the efficiency and the cavitation property of a propeller 2.

In the asymmetric preswirl stator 1 having the above structure, the three blades are radially disposed at intervals of 45 degrees on the port side. More specifically, the uppermost blade has a pitch angle of 17 degrees with the center line in the axial direction, the lowermost blade has a pitch angle of 23 degrees, arid the middle blade has a pitch angle between the above two angles of the uppermost and lowermost blades, i.e. a pitch angle of 19 degrees. On the other hand, one blade is horizontally disposed on the starboard side.

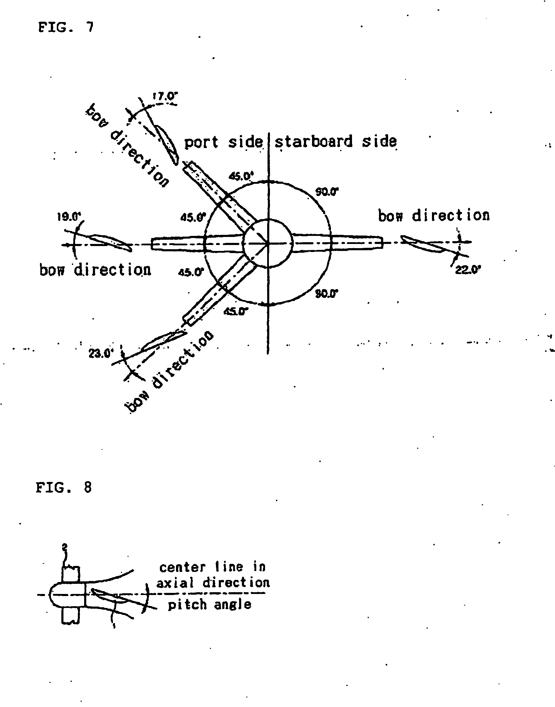

As shown in FIG. 7, since a considerable amount of the tangential velocity on the starboard side is canceled by the hull of the ship, three blades are installed on the port side and one blade is installed on the starboard side.

The above asymmetric preswirl stator 1 having one blade installed on the starboard side increases the axial velocity component on the starboard side, and thus makes the load distribution on the propeller 2 uniform, thereby improving the efficiency and the cavitation property of the propeller 2.

More specifically, three blades are installed at intervals of 45 degrees on the port side, and one blade is horizontally installed on the starboard side. Preferably, among the three blades installed on the port side, the uppermost blade has the smallest pitch angle with the center line in the axial direction, the lowermost blade has the largest pitch angle, and the middle blade has a pitch angle between the above two angles of the uppermost and lowermost blades. Further, preferably, the blade installed on the starboard side has a pitch angle of 22 or 28 degrees with the center line in the axial direction.

The asymmetric preswirl stator 1 having the above installation structure has an improvement of 1~2% in efficiency, compared with a conventional preswirl stator, and a reduction of approximately 25 tons in weight, compared with a conventional symmetric reaction pin, thus being economically advantageous. Further, since the load distribution on the propeller 2 becomes uniform, the efficiency and the cavitation property of the propeller 2 are improved.

Hereinafter, an asymmetric preswirl stator in accordance with an embodiment of the present invention will be described in detail with reference to the annexed drawings.

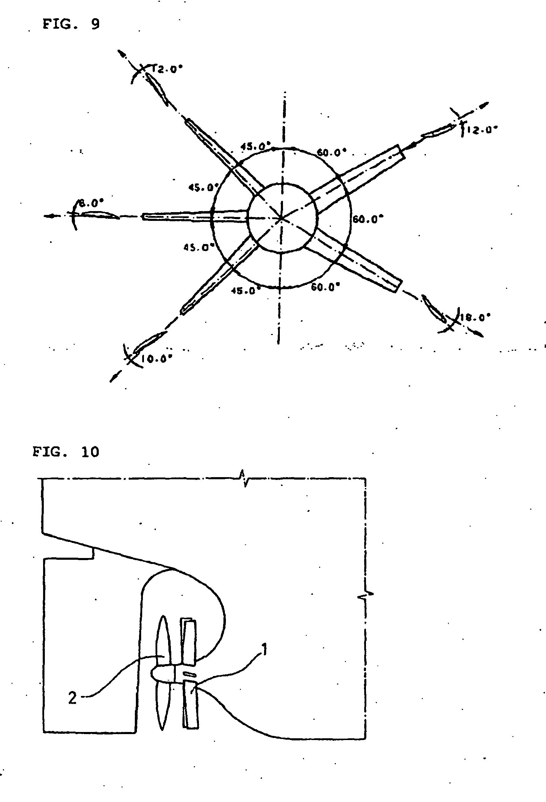

As shown in FIG. 9, since a considerable amount of the tangential velocity on the starboard side of a ship is canceled by the hull of the ship, three blades are installed on the port side and two blades are installed on the starboard side so as to minimize the unnecessary resistance on the starboard side.

In order to satisfy the ideal angle of attack of an oncoming flow, the pitch angles of the blades on the starboard side are relatively increased. Thereby, the flow of water coming into the propeller 2 is blocked, and the load on the propeller 2 on the starboard side is increased, thus increasing the upward flow due to the hull of the ship and the nonuniformity of load on the propeller 2.

Accordingly, preferably, in addition to the number of the blades on the starboard side, which is one fewer than the number of the blades on the port side, the stator 1 is designed such that the length of the chords of the blades on the starboard side is 75~85 % of the length of the chords of the blades on the port side. More preferably, the stator 1 is designed such that the length of the chords of the blades on the starboard side is approximately 80 % of the length of the chords of the blades on the port side.

The number of the blades on the starboard side, which is one fewer than that of the blades on the port side, and the length of the chords of the blades on the starboard side, which is smaller than that of the blades on the port side, increase the axial velocity on the starboard side, thus making the load distribution on the propeller 2 uniform and improving the efficiency and the cavitation property of the propeller 2.

That is, three blades are installed at intervals of 45 degrees on the port side, and two blades are installed at intervals of 60 degrees on the starboard side. Preferably, among the three blades installed on the port side, the uppermost blade has the largest pitch angle with the center line in the axial direction, the middle blade has the smallest pitch angle, and the lowermost blade has a pitch angle between the above two angles of the uppermost and middle blades. Further, preferably, among the two blades installed on the starboard side, the upper blade has the same pitch angle with the center line in the axial direction as that of the uppermost blade installed on the port side, and the lower blade has a pitch angle larger than the sum of the pitch angles of the middle and the lowermost blades installed on the port side.

Most preferably, the pitch angles of the uppermost, middle, and lowermost blades, installed on the port side, with the center line in the axial direction are respectively 12, 6, and 10 degrees, and the pitch angles of the upper and lower blades, installed on the starboard side, with the center line in the axial direction are respectively 12 and 18 degrees.

As apparent from the above description, the present invention provides an asymmetric preswirl stator, which is installed in front of a propeller of the stern of a low-speed full ship for improving a speed capacity of the ship, and has various asymmetric structures in consideration of wake current characteristics of the hull of the ship and a rotational direction of the propeller, thereby making the load distribution on the propeller uniform, and thus improving the efficiency and the cavitation property of the propeller.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. Asymmetric preswirl stator (1) of a ship, which is to be installed in front of a propeller of the stem of the ship, and comprising three blades radially installed at intervals of 45 degrees on the port side of the ship from a center line in an axial direction when installed on the ship, and **characterised in that** it comprises two blades radially installed at intervals of 60 degrees on the starboard side from a centreline in an axial direction when installed on the ship, and **in that** the length of the chords of the blades on the starboard side is 75~85% of the length of the chords of the blades on the port side.

2. Asymmetric preswirl stator (1) according to claim 1, wherein, among the blades installed on the port side, the uppermost blade has the largest pitch angle with the center line in the axial direction, the middle blade has the smallest pitch angle, and the lowermost blade has a pitch angle between the above two angles of the uppermost and middle blades.

3. Asymmetric preswirl stator (1) according to claim 2, wherein the pitch angles of the uppermost, middle, and lowermost blades, installed on the port side, with the center line in the axial direction are respectively 12, 6, and 10 degrees.

4. Asymmetric preswirl stator (1) according to any of claims 1 to 3, **characterised in that** the pitch angles of the upper and lower blades, installed on the starboard side, with the center line in the axial direction are respectively 12 and 18 degrees.

## Patentansprüche

1. Asymmetrischer Vordrall-Stator (1) eines Schiffes, der vor einem Propeller des Hecks des Schiffes einzubauen ist und drei Blätter umfasst, die in Radialrichtung in Abständen von 45 Grad auf der Backbordseite des Schiffes von einer Mittellinie in einer axialen Richtung eingebaut sind, wenn er an dem Schiff eingebaut ist, und **dadurch gekennzeichnet, dass** er zwei Blätter umfasst, die in Radialrichtung in Abständen von 60 Grad auf der Steuerbordseite von einer Mittellinie in einer axialen Richtung eingebaut sind, wenn er an dem Schiff eingebaut ist, und **dadurch**, dass die Länge der Sehnen der Blätter auf der Steuerbordseite 75-85 % der Länge der Sehnen der Blätter auf der Backbordseite beträgt.

2. Asymmetrischer Vordrall-Stator (1) nach Anspruch 1, wobei unter den Blättern, die auf der Backbordseite eingebaut sind, das oberste Blatt den größten Steigungswinkel mit der Mittellinie in der axialen Richtung hat, das mittlere Blatt den kleinsten Steigungswinkel hat und das unterste Blatt einen Steigungswinkel zwischen dem obigen zwei Winkeln des obersten und des mittleren Blattes hat.

3. Asymmetrischer Vordrall-Stator (1) nach Anspruch 2, wobei die Steigungswinkel des obersten, des mittleren und des untersten Blattes, die auf der Backbordseite eingebaut sind, mit der Mittellinie in der axialen Richtung jeweils 12, 6 bzw. 10 Grad betragen.

4. Asymmetrischer Vordrall-Stator (1) nach einem der Ansprüche 1 bis 3, **dadurch gekennzeichnet, dass** die Steigungswinkel des oberen und des unteren Blattes, die auf der Steuerbordseite eingebaut sind, mit der Mittellinie in der axialen Richtung jeweils 12 bzw. 18 Grad betragen.

## Revendications

1. Stator de tourbillon asymétrique (1) pour un navire, qui est destiné à être installé devant une hélice à la proue du navire, et comportant trois lames disposées radialement à des intervalles de 45° sur le côté bâbord du navire à partir d'une ligne centrale dans une direction axiale lorsqu'il est installé sur le navire, et **caractérisé en ce que** il comporte deux lames disposées radialement à des intervalles de 60° sur le côté tribord du navire à partir d'une ligne centrale dans une direction axiale lorsqu'il est installé sur le navire, et **en ce que** la longueur des cordes des lames sur le côté tribord vaut 75 à 85 % de la longueur des cordes des lames sur le côté bâbord.

2. Stator de tourbillon asymétrique (1) selon la revendication 1, dans lequel, parmi les lames installées sur le côté bâbord, la lame la plus haute possède l'angle de pas le plus grand avec la ligne centrale dans la direction axiale, la lame intermédiaire possède l'angle de pas le plus petit, et la lame la plus basse possède un angle de pas compris entre l'angle de la lame la plus haute et l'angle de la lame intermédiaire.

3. Stator de tourbillon asymétrique (1) selon la revendication 2, dans lequel les angles de pas des lames la plus haute, intermédiaire et la plus basse, installées sur le côté bâbord par rapport à la ligne centrale dans la direction axiale sont respectivement 12°, 6° et 10°.

4. Stator de tourbillon asymétrique (1) selon l'une des revendications 1 à 3, **caractérisé en ce que** es angles de pas des lames supérieure et inférieure, installées sur le côté tribord par rapport à la ligne centrale dans la direction axiale sont respectivement 12° et 18°.
